# EUROPEAN PATENT SPECIFICATION

(11) **EP 2 727 470 B1**
(45) Date of publication and mention of the grant of the patent: **28.02.2018**
(21) Application number: 13005763.1
(22) Date of filing: 27.07.2010
(51) Int. Cl.: A23G 1/18, A23G 1/00

(54) **Kit assembly for the modification of a tempering column**
Kitanordnung zur Modifizierung einer Temperierkolonne
Ensemble pour la modification d'une colonne de malaxage

(30) Priority: 01.04.2010 EP 10075150
(43) Date of publication of application: 07.05.2014
(62) Divisional of application: 10388010.0
(73) Proprietor: Aasted ApS, 3520 Farum (DK)
(72) Inventor: Holmud, Dennis, 2860 Søborg (DK)
(74) Representative: Heiden, Finn

(56) References cited:
- EP-A1- 0 893 066
- EP-A1- 0 947 140
- EP-A1- 1 425 975
- EP-A1- 1 616 487
- EP-A2- 1 249 174
- WO-A1-92/00015
- DE-A1- 2 602 877
- DE-A1- 10 329 177
- FR-A- 1 163 921

## Description

The present invention concerns a kit assembly of parts adapted for modifying an apparatus for continuous tempering of chocolate mass comprising a cooling stage (A), a crystallisation stage (B) and a mixing stage (C) arranged as a tempering column of stacked elements each having a water chamber and a chocolate compartment, as well as comprising pump means adapted for pumping the chocolate mass through the column from the bottom towards the top of the column or vice versa thereby providing a flow direction for the chocolate.

The tempering apparatus has disc-shaped chocolate chambers interconnected via chocolate channels and intermediary disc-shaped water chambers as well as a central shaft connected with stirring tools arranged in the chocolate chambers. However, the apparatus could have several different inner configurations as long as it is able to perform continuous tempering of fat-containing, crystallisable chocolate mass. The chocolate channels could for example be arranged at the periphery of the chocolate chambers or could be arranged as ring-shaped openings through which the shaft extends. When the openings are ring-shaped the stirring tools are typically sheave-formed. An external pump provides a pressure for the flow of chocolate through the chambers of the apparatus.

EP 1425975 A1 discloses a tempering apparatus where a conduit is branched off from the conditioning stage, so that it returns a stream of already crystallised chocolate to the crystallisation stage. In practice it became very difficult to exactly control the degree of crystallisation continuously performed in the crystallisation stage.

EP 1249174 A1 discloses an apparatus for tempering of chocolate mass comprising a first cooling stage, a second cooling stage and a reheating or mixing stage. In the first and the second cooling stages the chocolate is cooled to 31 to 35°C without crystallisation. The crystallisation takes place in the mixing stage as further mass is added, which has been enriched with chocolate crystals, such as in already crystallised "seed" powder. An example discloses, that mass is retracted from the tempering apparatus at the end of the cooling stage, is being mixed with the chocolate crystal powder and is added to the tempering apparatus at the beginning of the mixing stage. Another example discloses that mass from the supply tank is being mixed with the chocolate crystal powder and is added at the beginning of the mixing stage.

DE 103 29 177 A1 discloses an apparatus for tempering of chocolate mass having one or more internal by-pass channels extending through water chambers inside the apparatus. Separate streams of mass running through the by-pass channels are mixed with the main stream of mass for improving the general mixing characteristics of the mass being tempered. All streams of mass are subjected to the same temperature conditions dictated by the water chambers, being either cooled or heated. Consequently, all streams are either cooled and crystallized simultaneously or heated simultaneously.

Generally, the chocolate mass that may be continuously tempered by the apparatus according to the invention encompass all types of suspensions of non-fat particles such as sugar, milk powders and cocoa solids mixed up with a liquid fat constituent, so that the suspensions are capable of crystallizing. When it comes to the most widely used chocolate mass types, the fat constituent comprises genuine cocoa butter typically in a content of up to approximately 35%. However, the fat phase may also comprise substitutes as well. A small content of up to 2-3 % of genuine cocoa butter may still be left in the recipe. Substitutes may be in the form of other types of fat-containing oils such as palm-kernel oil. Chocolate types having the cocoa butter been replaced by other fats are often named commercially as compound chocolate, especially when the cocoa butter has been replaced completely by palm-kernel oil. Mass made of up to 100% cocoa butter may however also be continuously tempered. It is used later on as constituent in the production of different chocolate mass recipes.

However, for the continuous tempering to be performed, it is decisive, that whether the fat phase constitutes of genuine cocoa butter or substitutes, the fat phase must be capable of crystallizing into stable crystal types when the mass solidifies, such as the βV-crystals developing in genuine cocoa butter. Only then, eatable chocolate articles with good taste, crisp break and shiny appearance are created. The solidified chocolate articles will also achieve the longest possible shelf life and the best resistance against bloom, as instable crystals are diminished. If there is a content of in-stable crystals left in the mass, they will give rise to shorter shelf-life as the articles will bloom more quickly as when in-stable crystals are not present.

Optimal is then, when the type of crystals are stable βV-crystals only. The content thereof in the ready tempered chocolate mass shall be at a desired content- for example of 1,0 % for a specific production. Only then the manufacturer can rely on that the quality of his chocolate products are always the same.

Before the chocolate mass is supplied to perform the actual tempering process by running continuously through the tempering apparatus, the mass is heated to around 40-50°C in a premature step. Then essentially all the crystals in the chocolate mass are melted. The premature step is typically arranged distant to the tempering apparatus as the mass is heated in a storage tank. However, a heating step could also be arranged in the tempering apparatus in front of the cooling stage.

By the prior art tempering process the chocolate mass is being cooled to around 29-34°C in the cooling stage, so that crystals are very close to be created. Thereafter the mass passes through the crystallisation stage in which the temperature of the mass is typically lowered to 26-30°C. The mass and the heat-exchanging surfaces of the crystallisation stage is so cold, that crystals are created in the mass. The cooling water temperature is generally set to 10-14°C by the tempering apparatus at the market today. The approximate temperature of the heat-exchanging surfaces of the crystallisation stage is advised to be below 18°C, so that crystal creation ("impfning") is performed at the cooling surfaces and not in the mass. Thereafter, the mass is conditioned and the crystals are mixed out through the mass. By conditioning means that creation and development of new crystals in the mass proceed. The temperature is also raised 0,5-2,0°C in the conditioning and mixing stage. The purpose is to melt out as many as possible of the in-stable crystals, which unavoidably are created at the cold surfaces of the crystallisation stage. Desirable is to preserve a content of stable βV-crystals only, by trying to melt up the in-stable crystals, which melt at lower temperatures than the stable βV-crystals. The stable βV-crystals are preserved in the mass in an amount of typically 0,01% - 5%, preferably in an amount of 0,1% - 2%.

Apparatuses for performing the above continuous tempering methods have dominated the market for many years. Though the cold surfaces of the cooling and crystallisation stages have made the machines smaller in their physical size, they are however still large and expensive, especially when bigger amounts of mass shall be continuously tempered, i.e. more than 500kg/hour. The principle with the cold surfaces of the crystallisation stage also creates a huge amount of in-stable crystals, which very often makes it difficult to achieve the desirable, highest possible quality of the moulded product, especially in terms of shelf-life. This is because it is time consuming and energy consuming to remove in-stable crystals entirely during the final conditioning or reheating stage. The tempering columns of the apparatus would simply be to big and expensive if the conditioning stages should have sufficient capacity to achieve total re-melting of in-stable crystals. When mass with high fat content is tempered, then the amount of in-stable crystals created is also high. Then, the problem is even more exaggerated when chocolate with high fat content such as milk chocolate, white chocolate, nougat or filling mass for pralines are tempered.

A given size of a tempering machine at the market has a fixed length and consequently fixed areas for cooling, crystallisation and reheating.
Due to the above described problematic of continuous tempering of masses with a high fat content, it is well-known today, that the maximum capacity measured in kilograms per hour of tempered mass of a given tempering machine of the ones at the market is lowered severely when recipes with a high fat content are tempered. The maximum capacity is achieved when tempering dark chocolate having a fat content between 20-34%. In comparison herewith the capacity is typically lowered around 20% when milk chocolate, compound chocolate, nougat or other mass with a fat content between 30% and 40% is tempered.
When high fat recipes having fat content between 40% and 100% are tempered, the maximum capacity is lowered up to 50%.
A major disadvantage is then a very high energy consumption, firstly for cooling down the total mass and secondly for reheating the mass. Also the energy requirements are high for the chocolate pumps and the gear motors of the tempering machines.

When a manufacturer of chocolate articles is successful he needs to fulfil a market-demand very soon. That means, that he instantly has to increase his production of chocolate articles to the required level. However, the limits are set by the maximum production capacity of his equipment and especially of the tempering apparatus. So when the requirement is to produce more tempered chocolate than the maximum capacity of the tempering apparatus, he has to buy a further apparatus.

Then it would save the manufacturer time and money if the capacity of the existing tempering apparatus in his production could be raised.

The inventive kit assembly of parts comprises a device part having a first end and a second end, seen in the flow direction of the chocolate, and a primary conduit for chocolate mass extending between the two ends,
as well as a pump adapted to pump the chocolate through the conduit,
which kit further comprises a first and a second disc-shaped element adapted to substitute two disc-shaped elements of the tempering column, so that the first end is connected to the first disc-shaped element and the second end is connected to the second disc-shaped element, and so that the primary conduit is by-passing the stage (B) for creating crystals.

Hereby is provided a kit assembly, which is fast to mount on an existing tempering machine and is capable of raising the capacity of the machine severely.
The cost is low in comparison with a new tempering machine of higher capacity.

The inventive kit assembly of parts may also be adapted for modifying an apparatus for continuous tempering of chocolate mass comprising
a cooling stage (A), a crystallisation stage (B) and a mixing stage (C) arranged as a tempering column of stacked elements each having a water chamber and a chocolate compartment, openings for the chocolate arranged as ring-shaped openings through which the shaft of the column extends, as well as comprising pump means adapted for pumping the chocolate mass through the column from the bottom towards the top of the column or vice versa thereby providing a flow direction for the chocolate. Then the inventive kit comprises a device part having a first end and a second end, seen in the flow direction of the chocolate, and a primary conduit for chocolate mass extending between the two ends,
as well as a pump adapted to pump the chocolate through the conduit,
which kit further comprises a first and a second disc-shaped element each having a chocolate channel extending between the periphery and the central ring-shaped opening, and each being adapted to be inserted between two neighbouring disc-shaped elements of the tempering column, so that the first end of the device is connected to the first disc-shaped element and the second end is connected to the second disc-shaped element, and so that the primary conduit is by-passing the stage (B) for creating crystals being connected with the channels of the two disc-shaped elements.

According to the present invention, the modified apparatus onto which the kit assembly is arranged comprises a primary conduit for chocolate mass, which is arranged by-passing the stage for creating crystals.

Then, an amount of mass is by-passed outside the exchanger without being crystallised, while the remaining stream of the mass is flowing through the crystallisation stage for creating crystals in the mass. Thereafter, the two streams of mass are brought together and mixed in the mixing stage.

The by-passed stream of mass is not cooled more than to the lowest possible temperature without creating crystals. It means, that the temperature of the by-passed stream of mass is approximately 4-5°C higher than by the traditional tempering process, i.e. by which the complete mass is cooled down for crystallisation. Thereby, the cooling amount for creating crystals in the by-passed mass is superfluous. Consequently, the total amount of cooling energy required for tempering the mass is much lower than by the prior tempering apparatuses.

Hereby is provided an apparatus, which is especially energy saving in comparison with the prior art. The total energy requirements for providing continuously tempered chocolate mass of high quality is lowered by at least 40% and up to 70% for the mostly applied chocolate types, such as dark chocolate, milk chocolate, nougat and white chocolate. The total energy consumption has been measured and compared with the total energy consumption for a prior art tempering apparatus tempering the same amount and type of mass.

The total capacity deliverable from the modified apparatus is also raised severely in comparison with the prior art. The capacity raise for a particular size of tempering column is up to two times for such common chocolate types as dark chocolate, milk chocolate, white chocolate and compound. The capacity could for example be increased from 1000 kg/hour and up to 3000 kg/hour. Hereby is also achieved the benefit, that when applying the method according to the invention, the physical size of a given tempering machine could be reduced with approximately 30% for delivering the same amount of tempered chocolate per hour. This is especially an advantage, when the tempering apparatus comprises a column and has a high capacity, such as over 1000 kg/hour. Then, the height of the tempering column is reduced up to approximately 30%, for example from 4,0 Meters in height and to under 3,0 Meters in height. For tempering machines having a capacity of tempered chocolate of more than 3000 kg/hour the advantage is especially great. These prior art tempering machines are so big that they are very difficult to handle, to transport and to install. Typically, the only practical solution is to transport the machines with the column in horizontal position and then raise it to vertical at the customers factory during installation. With the inventive solution this is not necessary any longer, instead the height and the gravity of weight of the machines are lowered so much that they can be handled in upright position. The weight of the machines are also reduced severely with the inventive solution as the weight is reduced up to 50%. As the demand from the market for tempering apparatus having capacity over 3000 kg/hour is increasing the inventive solution has a great value. Also it is now possible to manufacture, handle and install tempering columns having a capacity over 8-10.000 kg/hour as their size and especially height as well as weight are severely reduced.

A further advantage is, that instable crystals may potentially only be created in the smaller first stream of mass being crystallised. Then, a much lesser amount of in-stable crystals are created than by the prior art. Consequently, lesser energy is required for re-melting the remaining instable crystals in the mass as compared with the prior art. But also the quality of the final mass is potentially better, as the amount of in-stable crystals are substantially lesser than by the prior art.

The stream of mass passing through the crystallisation stage is effectively cooled and crystallised. Especially advantageous is, when the conduit is adapted to by-pass more than half of the total amount of mass entering the apparatus.

When more than half of the total mass is by-passed, the remaining stream of mass in the crystallisation stage achieves more than the double time period for passing the crystallisation stage. The crystallisation is then much more effective than by the prior art. Especially the time prolonging has a positive effect on the initialisation and development of crystals in the mass. When the crystallised and the by-passed stream of mass are mixed, the crystals are effectively and homogenously spread out in the final stream of mass in the conditioning and mixing stage. Surprisingly, the amount of crystals are sufficient to achieve a very high quality of the ready tempered mass, which has been proved by taking out numerous tempering curves from samples. Test taken with DSC (Differential Scanning Calorimeter) proves that the samples contain βV-crystals only.

The by-passed stream of mass is kept at a constant temperature immediately before mixing. The temperature is so high, that the by-passed mass is kept free from crystals. The temperature must also be low enough for the crystals in the crystallised stream not to be re-melted during mixing therewith. To find the appropriate temperature for the particular mass is done by simple "trial and error" by withdrawing a sample and making a tempering curve. The temperature is typically between 29 and 34°C, typically 30-33 °C, however is dependent of the particular mass. The temperature of the by-passed amount of mass is then 4-7°C higher than the temperature of the amount of mass passing through the crystallisation stage.

When the primary conduit is adapted to by-pass between 65% and 95% of the total amount of mass entering the apparatus, the savings in energy are especially high. Then 5% to 35% of the total amount of mass is crystallised in the crystallisation stage. Consequently, the available time for crystallisation of the mass passing through the crystallisation stage is severely extended. When 95% of mass is by-passed, the crystallisation time available is twenty times as long as by the prior art. When 90% of mass is by-passed, the crystallisation time available is ten times as long as by the prior art. When 75% of mass is by-passed, the available crystallisation time is extended four times, and when 70% is bypassed the crystallisation time is extended more than three times. The consequence is, that the actual crystallisation process is a high quality process, which provides much better conditions for the crystals to be initiated and to develop in numbers than by the prior art. This is due to the severely extended time period that the chocolate has available in the crystallisation stage.

As a further consequence of the prolonged time period available for crystallisation, the temperature of the crystallisation surfaces can be raised to more than 19 °C, i.e. typically 20 °C. Then, the crystal initiation primarily takes place in the mass instead of at cold crystallisation surfaces as by the prior art. The amount of undesirable crystals, which always concomitant develop at cold surfaces, are then diminishing, and the need for re-melting these crystals in the conditioning and mixing stage is avoided. As a consequence, the resultant quality is higher with the inventive apparatus and the energy is not needed any longer for reheating the total mass 0,5-2,0°C as by the prior art.

The inlet of the primary conduit can be connected to the end of the cooling stage as close as possible to the transition between the cooling stage and the crystallisation stage as possible. This means, that in practice, the inlet could be arranged in either of both stages, when its not practically possible to arrange it just in-between the two stages. However, decisive is, that the by-passed chocolate mass is essentially free from crystals.

The outlet of the primary conduit can be connected to the beginning of the conditioning stage as close as possible to the transition between the crystallisation stage and the conditioning and mixing stage. This means, that in practice the inlet could be arranged in each of both stages, when its not practically possible to arrange it just in-between the two stages. However, decisive is, that the by-passed chocolate mass is essentially free from crystals and that the chocolate mass be crystallised is sufficiently crystallised when the mass is mixed together.

The invention is further described by referring to the drawing, in which
figure 1 discloses an apparatus having a by-pass, seen from the side,
figure 2 schematically discloses an example of the inside of the apparatus,
figure 3 schematically discloses an embodiment of the apparatus of figure 1 by which a pump is arranged in the primary conduit,
figure 4 the inventive kit assembly having elements in the form of disc-shaped sheaves,
figure 5 the arrangement of figure 4 in a tempering column,
figure 6, 7 and 8 details of the embodiment disclosed in figure 4.

The apparatus 1 disclosed in figure 1 comprises a tempering column 2 for continuous tempering of chocolate mass. Externally on the column 2 is arranged a device 3 for by-passing chocolate outside the column, an inlet 4 and a pump 5 for pumping chocolate mass into the column 2, and an outlet 6 for the ready tempered mass leaving the column. The column 2 is normally arranged in a steel frame or support, which is not disclosed, as it is not part of the invention.

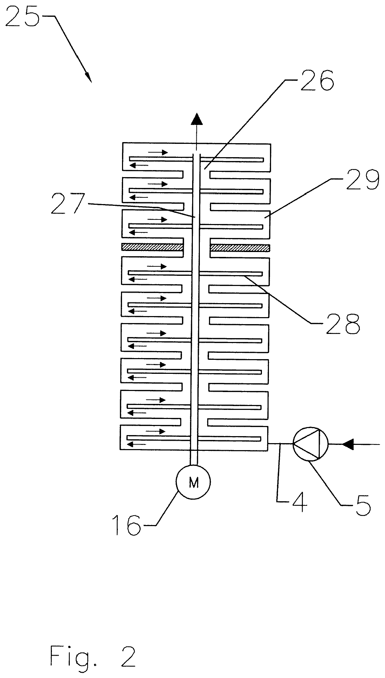

The column 2 comprises a cooling stage A, a crystallisation stage B and a conditioning and mixing stage C. The device 3 comprises a pump 7 as well as a block 8 with internal conduits. In figure 2 is schematically disclosed the tempering column 25 as well as the inner conduits of the block 8 and the pump 7.

However, the column of apparatus 1 could have several different inner configurations as long as it is able to perform continuous tempering of fat-containing, crystallisable chocolate mass. As disclosed in figure 2 the column 25 the chocolate channels can also be arranged as ring-shaped openings 26, through which a shaft 27 extends. When the openings 26 are ring-shaped the stirring tools 28 are typically sheave-formed so that the chocolate can pass through at a further ring-shaped opening 29 at the periphery. An external pump 5 provides a pressure for the flow of chocolate through the chambers of the apparatus.

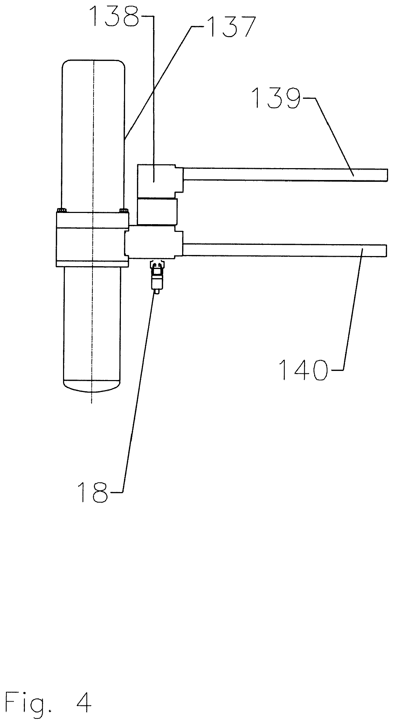

The flow-direction of the chocolate is in figure 4 disclosed from bottom to top. However it could also be from top to bottom of the columns, or it could even be horizontal as long as the by-passing conduit is arranged according to the inventive idea.

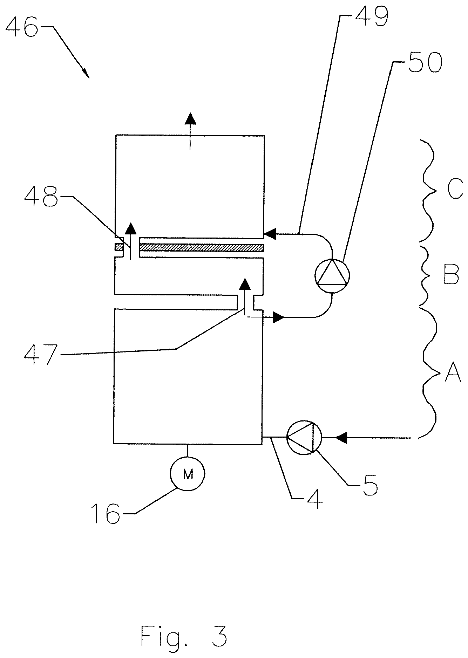

In figure 3 is disclosed the inventive principle mounted on a typical standard column 46 available in the prior art. An opening 47 is arranged for the chocolate flow from the cooling stage A and to the crystallisation stage B, and an opening is arranged for the chocolate flow from the crystallisation stage B and to the mixing stage C. A conduit 49 is arranged, for example in a tube outside the column. A pump 50 is arranged in the conduit for pumping the by-passed amount of chocolate outside the crystallisation stage B.

In figure 4 is disclosed the inventive kit assembly for upgrading a tempering column of the type having a central shaft an ring-shaped openings there around for flow of chocolate from element to element of the column. The kit assembly comprises a pump 137, a device 138 and a first and a second disc-shaped element 139 and 140.

Tempering columns are today often manufactured with massive discs arranged at each end of the crystallisation stage B with the purpose of making a temperature partition between the crystallisation stage and the neighbouring stages of the column. These discs could advantageously be utilised in relation to the present invention so that the sheaves are substituted with the first and the second element according to the inventive kit assembly.

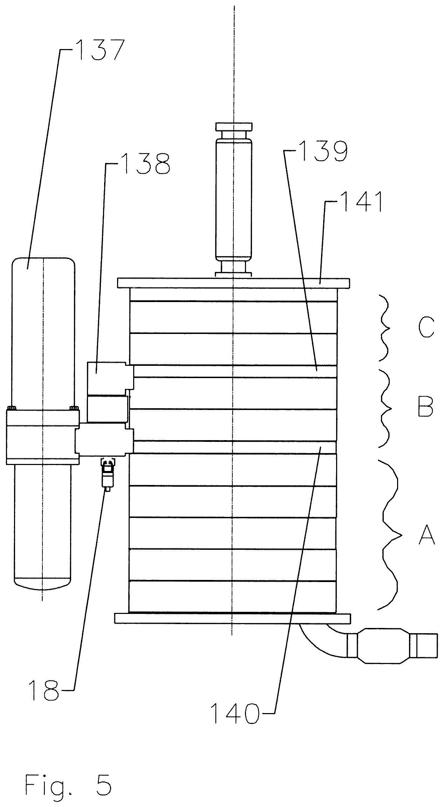

In figure 5 the first and second elements 139 and 140 have replaced such massive discs arranged at each end of the crystallisation stage B of a column 141.

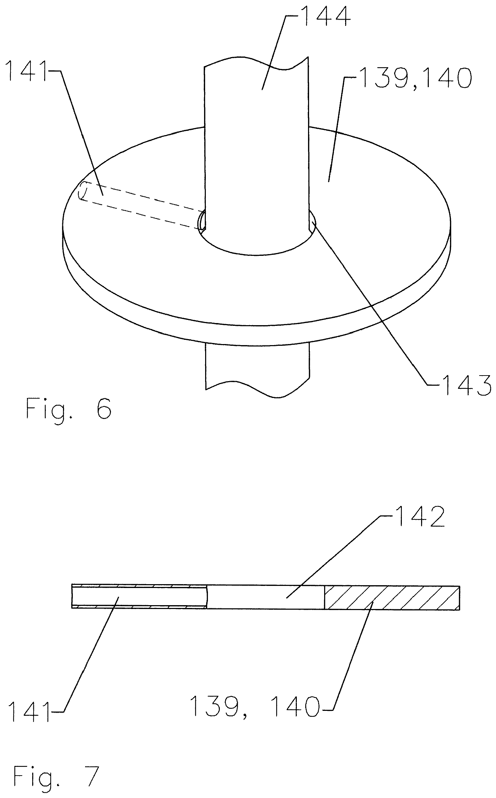

The disc-shaped elements 139 and 140 are disclosed in figures 6 and 7. The discs are typically solid and has a channel 141 extending from the outer periphery and to the central opening 142 in the discs. A ring-shaped gap 143 for the flow of chocolate is arranged around the shaft 144 of the tempering column 141.

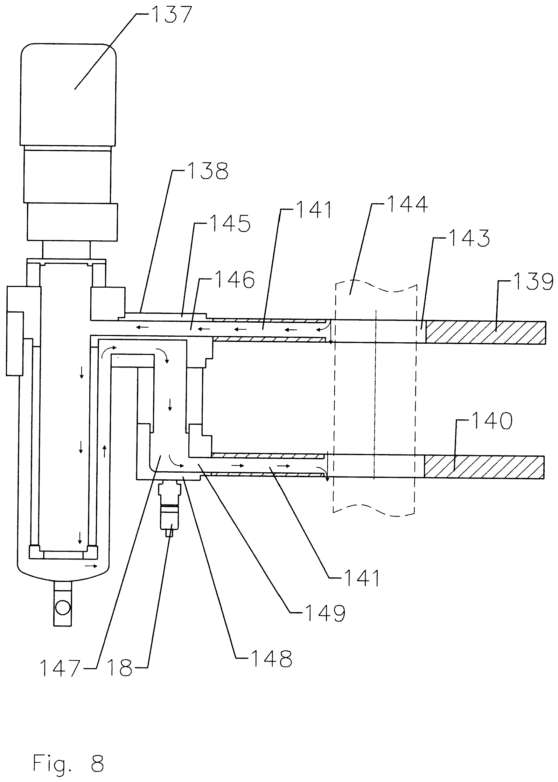

In figure 8 is in more detail disclosed the embodiment of the kit assembly disclosed in figures 4-7. The device 138 has an upper end 145 with an inlet 146 to the primary chocolate channel 147. The inlet 146 is connected to the peripheral channel 141 of the first disc element 139. The device 138 also has a lower end 148 with an outlet that is connected to the channel 141 of the second disc element 140. By the action of the pump 137 some of the chocolate is branched of from the main flow of chocolate pumped through the ring-shaped openings 143 in the tempering column. The chocolate branched of is flowing through the channel 141 in the upper element 139 and via the inlet 146 into the pump 137 and therefrom to the primary channel 147 and via the outlet 149 into the channel 141 in the second lower element 140 and into the ring-shaped opening and into the column. The branched of flow of chocolate thereby by-passes the crystallisation stage B of the column.

Common for the disclosed embodiments of the present invention is, that they may all be implemented in an existing tempering column without altering the height of the column. As existing elements of the column are substituted with the inventive elements the building height of the column is unchanged so that the length of the shaft among others is unchanged. Two existing elements of the column may also be altered so that they are configured according to the elements of the invention.

## Claims

1. Kit assembly of parts adapted for modifying an apparatus (1, 2, 25, 46, 141) for continuous tempering of chocolate mass comprising
a cooling stage (A), a crystallisation stage (B) and a mixing stage (C) arranged as a tempering column (42, 141) of stacked elements each having a water chamber and a chocolate compartment, openings for the chocolate arranged as ring-shaped openings (26, 143) through which the shaft (27, 144) of the column extends, as well as comprising pump means (5) adapted for pumping the chocolate mass through the column from the bottom towards the top of the column or vice versa thereby providing a flow direction for the chocolate, **characterised in,**
**that** the kit comprises a device part (138) having a first end and a second end, seen in the flow direction of the chocolate, and a primary conduit (147) for chocolate mass extending between the two ends,
as well as a pump (137) adapted to pump the chocolate through the conduit,
which kit further comprises a first (139) and a second (140) disc-shaped element each having a chocolate channel (141) extending between the periphery and the central ring-shaped opening (143), and each being adapted to be inserted between two neighbouring disc-shaped elements of the tempering column, so that the first end of the device (138) is connected to the first disc-shaped element (139) and the second end is connected to the second disc-shaped element (140), and so that the primary conduit (147) is by-passing the stage (B) for creating crystals being connected with the channels (141) of the two disc-shaped elements.

## Patentansprüche

1. Kitanordnung von Teilen, die zur Modifizierung einer Vorrichtung (1, 2, 25, 46, 141) zur kontinuierlichen Temperierung von Schokoladenmasse ausgeführt ist, die Folgendes umfasst:
eine Kühlungsstufe (A), eine Kristallisationsstufe (B) und eine Mischungsstufe (C), angeordnet als eine Temperierungssäule (42, 141) von übereinander angeordneten Elementen, die jeweils eine Wasserkammer und ein Schokoladenfach aufweisen, Öffnungen für die Schokolade, die als ringförmige Öffnungen (26, 143) ausgeführt sind, durch die sich der Schaft (27, 144) der Säule erstreckt, sowie ein Pumpenmittel (5), das dazu ausgeführt ist, die Schokoladenmasse durch die Säule vom Boden zum oberen Teil der Säule hin oder in entgegengesetzter Richtung zu pumpen, wodurch eine Fließrichtung für die Schokolade erzeugt wird, **dadurch gekennzeichnet,**
**dass** das Kit ein Geräteteil (138) mit einem ersten Ende und einem zweiten Ende, betrachtet in der Fließrichtung der Schokolade, sowie eine primäre Leitung (147) für Schokoladenmasse, die sich zwischen den beiden Enden erstreckt, umfasst,
sowie eine Pumpe (137), die dazu ausgeführt ist, die Schokolade durch die Leitung zu pumpen,
wobei das Kit ferner ein erstes (139) und ein zweites (140) scheibenförmiges Element umfasst, die jeweils einen sich zwischen der Peripherie und der mittleren ringförmigen Öffnung (143) erstreckenden Schokoladenkanal (141) aufweisen und die jeweils dazu ausgeführt sind, zwischen zwei benachbarten scheibenförmigen Elementen der Temperierungssäule eingeführt zu werden, so dass das erste Ende der Vorrichtung (138) mit dem ersten scheibenförmigen Element (139) verbunden ist und das zweite Ende mit dem zweiten scheibenförmigen Element (140) verbunden ist, und so dass die primäre Leitung (147) die Stufe (B) zur Erzeugung von Kristallen mit der Verbindung mit den Kanälen (141) der beiden scheibenförmigen Elemente umgeht.

## Revendications

1. Ensemble sous forme de kit de pièces prévu pour modifier un appareil (1, 2, 25, 46, 141) pour la régulation en continu de la température d'une masse de chocolat, comprenant :
un étage de refroidissement (A), un étage de cristallisation (B) et un étage de mélange (C) disposés sous forme de colonne de régulation de température (42, 141) d'éléments empilés ayant chacun une chambre à eau et un compartiment de chocolat, des ouvertures pour le chocolat disposées sous forme d'ouvertures de forme annulaire (26, 143) à travers lesquelles s'étend l'arbre (27, 144) de la colonne, et comprenant également des moyens de pompage (5) prévus pour pomper la masse de chocolat à travers la colonne depuis le bas vers le haut de la colonne ou vice versa pour fournir ainsi un sens d'écoulement au chocolat, **caractérisé en ce que**
le kit comprend une partie de dispositif (138) ayant une première extrémité et une deuxième extrémité, vu dans la direction d'écoulement du chocolat, et un conduit primaire (147) pour la masse de chocolat, s'étendant entre les deux extrémités,
ainsi qu'une pompe (137) prévue pour pomper le chocolat à travers le conduit, lequel kit comprend en outre un premier (139) et un deuxième (140) élément en forme de disque ayant chacun un canal (141) de chocolat s'étendant entre la périphérie et l'ouverture centrale de forme annulaire (143), et chacun étant prévu pour être inséré entre deux éléments adjacents en forme de disque de la colonne de régulation de température, de telle sorte que la première extrémité du dispositif (138) soit connectée au premier élément en forme de disque (139) et que la deuxième extrémité soit connectée au deuxième élément en forme de disque (140), et de telle sorte que le conduit primaire (147) contourne l'étage (B) de création de cristaux qui est connecté aux canaux (141) des deux éléments en forme de disque.
